# EUROPEAN PATENT SPECIFICATION

(11) **EP 2 983 970 B1**
(45) Date of publication and mention of the grant of the patent: **15.08.2018**
(21) Application number: 14723843.0
(22) Date of filing: 10.04.2014
(51) Int. Cl.: B60K 1/00, B60K 1/02, B60K 7/00, B60K 17/342, B60K 17/356, B60L 11/18, B60L 15/20

(54) **VEHICLE FOUR-WHEEL DRIVE SYSTEM**
FAHRZEUG-ALLRADANTRIEBSSYSTEM
SYSTÈME D'ENTRAÎNEMENT DE QUATRE ROUES DE VÉHICULE

(30) Priority: 10.04.2013 GB 201306581
(43) Date of publication of application: 17.02.2016
(73) Proprietor: Ross Robotics Limited, Harwell Campus, Didcot OX11 0QX (GB)
(72) Inventor: NORMAN, Philip Ross, Gerrards Cross Buckinghamshire SL9 7LG (GB)
(74) Representative: Murgitroyd & Company
(86) International application number: PCT/GB2014/000140
(87) International publication number: WO 2014/167273

(56) References cited:
- DE-A1- 3 901 624
- DE-U1-202008 001 682
- GB-A- 2 328 417
- US-A- 4 193 636
- US-A- 4 407 381
- US-A- 4 837 694
- US-A- 4 962 821
- US-A- 5 318 141
- US-A- 6 131 635
- US-A1- 2004 200 657
- US-A1- 2008 258 550
- US-A1- 2009 000 836
- US-B1- 6 182 780

## Description

The present invention relates to a vehicle four-wheel drive system, particularly for a robotic vehicle.

Four-wheel drive systems are known in many forms, ranging from systems with a single motor driving wheels directly and/or via transmission arrangements to systems with an individual motor for each wheel. Systems of the latter kind are particularly appropriate to the use of electric motors, which can be of relatively compact construction and derive energy from a single on-board power source by way of simple current feed lines. Robotic vehicles are often tasked with travel over ground or analogous support surfaces to be traversed, including floors, steps, etc., which on occasion are occupied by obstacles of various forms. These represent a challenge to smaller-scale vehicles employed in specialised fields such as investigation of explosive devices, internal inspection of ducts, remotely-controlled surveillance and similar activities. In such cases a four-wheel drive system or track-laying system is advantageous, the former offering greater speed and flexibility, but with reduced capability of traction in certain circumstances, for example surmounting obstacles which are precipitous in relation to the vehicle size. However, manoeuvrability - particularly a minimised turning circle - is equally important, as is adaptability to alternative or enhanced driving capability through, for example, provision of different or additional motors.

A four-wheel drive system is disclosed in US 4962821 (D1), in one variant (Fig. 6) of which two diagonally opposite wheels are directly motor-driven and the other two diagonally opposite wheels are driven by parallel endless chains taking drive from the motor-driven wheels. This system provides traction relative to the ground exclusively by the wheels. Another such system, disclosed in US 2004/0200657 (D2), which comprises the features mentioned in the preamble of claim 1, employs in one variant (Figs. 5 and 6) parallel rotary power transmission mechanisms of unspecified kind with a function similar to the chains of D1, in which again traction is exclusively by way of wheels.

It is therefore an object of the present invention to provide a four-wheel driven system for a vehicle, especially a robotic vehicle, with an enhanced level of flexibility in its construction and operation, including scope for modularity and adaptability to variant forms.

A further object is to provide a drive system with potential for increased manoeuvrability, especially through a skid-steer facility which, without the need for steerable wheels, may permit turning in little more than the length of a vehicle equipped with the system.

Yet another objection is creation of a drive system able to provide increased traction in relation to challenging terrain.

Other objects and advantages of the invention will be apparent from the following description.

According to the present invention there is provided a vehicle four-wheel drive system comprising a first axle having two coaxial first axle shafts respectively provided at the distal ends thereof with two first ground-engaging wheels, a second axle parallel to and spaced from the first axle and having two coaxial second axle shafts respectively provided at the distal ends thereof with two second ground-engaging wheels, first rotary drive means for driving a first one of the first axle shafts, second rotary drive means for driving a first one of the second axle shafts, first drive transmission means for transmitting drive from the first one of the first axle shafts to the second one of the second axle shafts and second drive transmission means for transmitting drive from the first one of the second axle shafts to the second one of the first axle shafts, the wheels at the first ones of the first and second axle shafts being disposed on a first diagonal and the wheels at the second ones of the first and second axle shafts on a second diagonal of the drive system, characterised in that at least one of the first and second drive transmission means comprises an endless belt which defines a ground-engaging run and a return run.

Such a system achieves four-wheel drive on the basis of two motors which directly drive just two of the wheels, these being located diagonally in the system. The other two wheels are driven indirectly, with the result that the wheels on one side of the system are driven directly/indirectly by one motor and those on the other side of the system directly/indirectly by the other motor. This configuration creates a simple layout in which a motor can be controlled, subject to provision of an appropriate control arrangement, to influence drive on the respective side of the vehicle, which is a precondition for, for example, skid-steering of a vehicle equipped with the system. The layout is also compatible with a symmetrical arrangement of the system components, which assists realisation of modularity and thus provides benefits with respect to a reduced parts count, simplification of maintenance and overall economy. The use of two drive means not only confers advantages in relation to system flexibility, but also reduces load wear by comparison with a drive system with a single prime mover.

For preference, at least one of the first and second drive means comprises a gearbox for changing the speed of driving of the axle shaft driven by that drive means. Such a gearbox increases the overall flexibility of the system in terms of attainable drive speeds, as with any drive system incorporating a speed change arrangement, and also provides a point for potential influencing of drive speed between the two sides of the system, such as by selection of different drive ratios for the two sides of the system at a given point in time and/or by action on a clutch incorporated in or associated with the gearbox.

Each of the first and second drive means preferably comprises a respective motor, especially an electric motor, which represents a simple and economic form of prime mover, particularly for a robotic vehicle, and can operate with current drawn from an on-board power supply. However, drive means of other kinds and powered by other forms of energy are equally usable. The first and second drive means are preferably controllable independently of one another, which allows, inter alia, a variation in the drive power available at the two sides of the system according to requirements. In that case it is particularly advantageous if the first and second drive means are controllable to drive the first ones of the first and second axle shafts at respectively different speeds to induce skid-steer by the wheels. This permits rapid change of direction of a vehicle equipped with such a drive system and lacking steerable wheels, in particular execution of changes of direction in little more than the length of the vehicle, which is of substantial advantage for a manned or unmanned vehicle tasked with negotiation of surfaces with obstacles requiring tight turning for avoidance of collisions. The speed of driving of each of the first ones of the first and second axle shafts can in that case include zero speed, thus cessation of drive. The variation in drive operation preferably also includes a capability of operating at least one of the first and second drives to provide drive in a selectable one of two opposite directions, thus forward drive and reverse drive. Apart from the obvious benefit of both forward and reverse driving of a vehicle equipped with the system, drive of the wheels at one side of the system opposite to those at the other side can assist turning in the manner of skid-steering, but with minimised skidding. In these circumstances, turning of the vehicle generally within its own length may be possible. In this connection, for preference the wheels provided at the first ones of the first and second axle shafts have substantially smooth ground-engaging surfaces and the other wheels have structured ground-engaging surfaces. The provision of substantially smooth ground-engaging surfaces of the directly driven axle shafts assists vehicle turning, particularly in the case of a skid-steering facility, through elimination of the tyre scrub usual with tyre-shod wheel rims.

Constructional simplicity of the system may be promoted if it comprises single control means for the first and second drive means, in which case it is advantageous in terms of system component packaging and layout if the control means is positioned in the system in a location between the first and second drive means. Even if the two drive means are independently controllable, control inputs can still be prepared and delivered by a single control source, for example a microprocessor and/or interface for remotely transmitted control signals. Similarly, the system can comprise single energy supply means for supplying energy to the first and second drive means, such as a single battery or array of batteries in the case of electrically powered drive means. For reasons similar to those mentioned in connection with siting a single control means it is advantageous if the energy supply means is positioned in the system in a location between the first and second drive means.

For preference the coaxial axle shafts of either or each of the first and second axles are coupled together axially, but to be rotatable relative to one another, so that a relatively rigid - in axial direction - configuration of the axle formed by the intercoupled axle shafts is achieved. This in turn contributes rigidity to the structure of a vehicle incorporating the drive system.

The fact that at least one of the first and second drive transmission means comprises an endless belt represents a particularly economic form of transmission of proven reliability and efficiency. Transmission belts are also readily available as proprietary items, which allows the possibility of design of the system at the outset to make use of available belts of suitable dimensions, flexibility and tensile strength. The belt is preferably coupled to the respectively associated axle shaft by way of pulleys, which also offers the possibility of use of proprietary components, including matched belt-and-pulley sets. In such a construction of the first or second drive transmission means it can be advantageous if the belt is arranged to slip relative to at least one of the pulleys above a predetermined threshold value of torque, so that loading of the drive means can be limited to prevent imposition of excessive strain. The belt is, for preference, a V-belt, which can engage in pulley grooves of matching cross-section or - if slip is desired - differing cross-section reducing belt-to-pulley contact area, but other forms of belt can also be employed, for example a cogged belt coupled to the respectively associated axle shafts by way of cogged wheels. In that case, slip in the transmission of drive can be achieved - if indeed it is desired - by a suitable measure such as connection of at least one of the cogged wheels with the respective axle shaft by way of a slipping clutch providing slip relative to the shaft above a predetermined threshold value of torque.

A particular feature of the drive system utilising an endless belt for at least one of the first and second drive transmission means is that a substantial increase in traction delivered by the system and a capability of negotiating obstacles, especially acclivities and declivities, in the manner of a track-laying vehicle can be achieved by virtue of the fact that the belt defines a ground-engaging run and a return run. In that case the belt not only transmits drive between driving and driven axle shafts, but also serves as a traction element supplementing the wheels of those shafts. The belt can accordingly assist forward motion, or reverse motion if this facility is provided, by exertion of tractive force on surface elevations or other significant departures from surface planarity that might otherwise defeat the capability of the system wheels to gain sufficient grip, with the result that a vehicle equipped with such a system may have the capability to negotiate rocks and similar obstacles, climb steps and stairs, traverse unstable or yielding surfaces and generally achieve traction analogously to a pure track-lying drive arrangement.

The circumstances under which such a supplementary traction element comes into action can be effectively determined if the ground-engaging run extends substantially parallel to a line tangential to points of ground engagement of the wheels at the axle shafts associated with the respective drive transmission means and at a predetermined spacing from that line towards the axes of those axle shafts. In that case, the ground-engaging run is effective only when a part of the surface over which a vehicle equipped with the drive system is travelling protrudes into the area between the associated wheels and above the stated line tangential to the wheel circumferences by an amount equal to or exceeding the stated spacing. Selection of that spacing thus influences the point at which the belt takes on a supplementary traction function. In the case of relatively smooth surfaces free of obstructions or abrupt departures from horizontality the belt exercises only its drive transmission function and remains out of action with respect to supplementary traction, so that traction is provided by the wheels alone and vehicle speed is optimised. It will be appreciated that if both first and second drive transmission means comprise belts with ground-engaging runs the versatility and tractive power of the drive system is greatly enhanced, since the belts can act as supplementary traction elements independently of one other on the two sides of the system and can benefit from the already mentioned preferred features of independent control and speed variability of the first and second drive means. Thus, like the wheels, the belt on one side can, for example, exert tractive force of variable levels and in selectable directions regardless of the belt on the other side.

The tractive capability of the belt can be increased if the belt has ground-engaging structures, especially transversely extending ridges. The ridges can be at right angles or at any suitable inclination to the belt axis of circulation or can be provided in various shapes, for example V-shaped. The structures can also take the form of discrete nubs or other forms of protrusion.

Advantages with respect to system cost and adaptability can be achieved if the system has a modular configuration in which the first drive means, first drive transmission means and first axle shafts have substantially the same component construction and arrangement as the second drive means, second drive transmission means and second axle shafts. In that case, in principle only two basic modules of substantially the same form are needed in order to create the system. Additionally or alternatively the system can have a modular configuration in which the first drive means, first drive transmission means and first axle shafts have substantially the same component construction and arrangement as the second drive means, second drive transmission means and second axle shafts. The system can then have, in effect, mirror symmetry about two axes, which may significantly simplify construction and assembly and appreciably reduce the parts count.

A drive system having the basic layout described in the foregoing is particularly amenable to extension or development for increased driving power, for example by provision of third drive means for driving the first one of the second axle shafts and fourth drive means for driving the second one of the first axle shafts. Such third and fourth drive means may be arranged to provide increased power and torque when it is specifically needed, such as in the case of travel over particularly challenging surfaces, for which reason it is advantageous if the third and fourth drive means are operable independently of the first and second drive means and also, for preference, independently of one another. Like the first and second drive means, each of the third and fourth means preferably comprises a respective motor, for example an electric motor. In such a developed form the drive system can thus provide four-wheel drive with direct driving of two diagonally opposite wheels at all times, indirect driving of the other two wheels by drive transmission from the axle shafts of the directly driven wheels, and optional or selectable direct driving of the latter two wheels (conjunctively or independently) if or when this is required, traction being exerted by the wheels and optionally by belt components of the drive transmission means participating in the indirect driving. The driving force exerted by the belt components, when deployed in conjunction with direct driving of the wheels by the four motors, constitutes a valuable power and torque assist particularly in the context of the requirements of larger vehicles.

A preferred embodiment will now be more particularly described by way of example with reference to the accompanying drawings, in which:
Fig. 1 is a schematic plan view of a first drive system embodying the invention;
Fig. 2 is a schematic elevation of the drive system of Fig. 1; and
Fig. 3 is a schematic plan view of a second drive system embodying the invention.

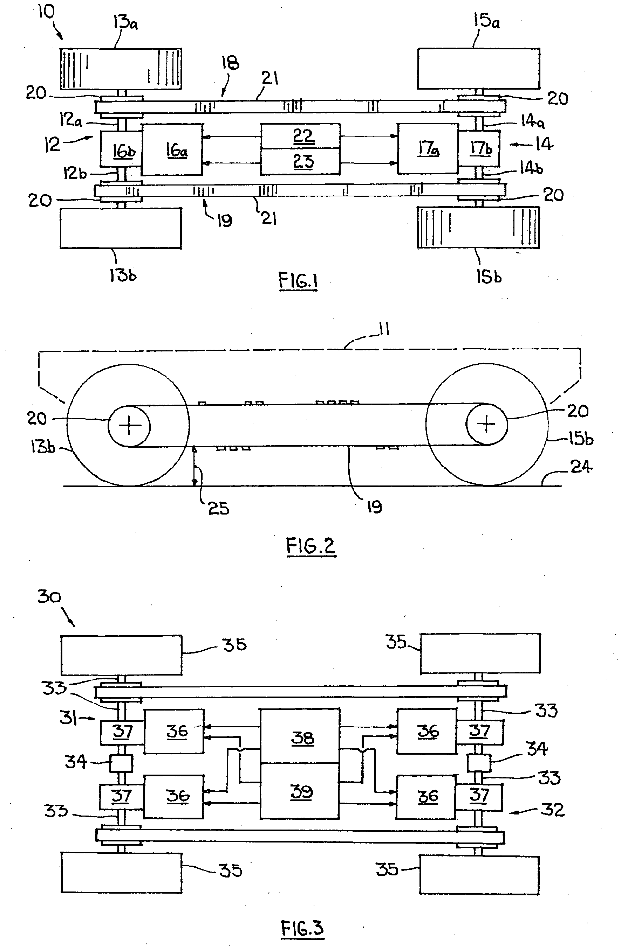

Referring now to the drawings, in particular Figs. 1 and 2, there is shown - in highly diagrammatic form - a four-wheel drive system 10 suitable for a robotic or remotely controlled vehicle 11 indicated in Fig. 2 by an arbitrary dashed-line profile. The drive system is, however, usable for manned vehicles.

The system 10 comprises a first axle 12 composed of two coaxial first axle shafts 12a and 12b, which are provided at their mutually remote ends with, respectively, two wheels 13a and 13b serving as a first pair of primary traction elements of the system, and a second axle 14 parallel to and spaced from the first axle and composed of two coaxial second axle shafts 14a and 14b, which are provided at their mutually remote ends with, respectively, two wheels 15a and 12b serving as a second pair of primary traction elements of the system.

The drive system 10 further comprises first drive means and second drive means, the first drive means being composed of a first variable speed electric motor 16a drivingly coupled to and forming a modular unit with a first gearbox 16b incorporated in the first axle 12 and the second drive means being composed, analogously, of a second variable speed electric motor 17a drivingly coupled to and forming a modular unit with a second gearbox 17b incorporated in the second axle 13. The first gearbox 16b has, apart from speed change gears, a drive output drivingly connected with one of the first axle shafts, namely the shaft 12a, whereby that axle shaft and the associated wheel 13a are directly driven by the first motor 16a via the first gearbox 16b, and a freewheel output non-drivingly coupled with the other one of the first axle shafts, namely the shaft 12b. The two first axle shafts 12a and 12b are thus coaxially coupled by the gearbox 16b so that the first axle 12 is substantially rigid in axial direction, but are not rotationally coupled by the gearbox. The two first axle shafts are therefore rotatable relative to one another. Similarly, the second gearbox 17b has, apart from speed change gears, a drive output drivingly connected with one of the second axle shafts, namely the shaft 14b, whereby that axle shaft and the associated wheel 15b are directly driven by the second motor 17a via the second gearbox 17b, and a freewheel output non-drivingly coupled with the other one of the second axle shafts, namely the shaft 14a. The two second axle shafts 14a and 14b are thus coaxially coupled by the gearbox 17b so that the second axle 14 is substantially rigid in axial direction, but are not rotationally coupled by that gearbox. The second axle shafts are therefore rotatable relative to one another.

In addition the drive system comprises first drive transmission means 18 and second drive transmission means 19. The first drive transmission means 18 serves to transmit drive from the axle shaft 12a driven by the first motor 16a to the axle shaft 14a, which has merely a freewheel connection with the second drive motor 17a. The second drive transmission means 19 serves to transmit drive from the axle shaft 14b driven by the second motor 17a to the axle shaft 14b, which has merely a freewheel connection with the first drive motor 16a. Thus, two axle shafts and the associated wheels are directly driven by the motors, i.e. the shafts 12a and 14b and the wheels 13a and 15b, and the other two axle shafts and the associated wheels, i.e. the shafts 12b and 14a and the wheels 13b and 15a, are indirectly driven by way of the drive transmission means. The directly driven wheels 13a and 15b are disposed on a first diagonal and the indirectly driven wheels 13b and 15a on a second diagonal of the drive system or, stated differently, one directly driven wheel and one indirectly driven wheel are disposed on one side of the system and the other directly driven wheel and other indirectly driven wheel on the other side of the system, wherein each directly driven wheel is opposite a respective indirectly driven wheel.

Each drive transmission means 18 or 19 is composed of a respective pulley 20 fixedly mounted on the associated driving and driven axle shafts and an endless belt 21 frictionally coupled with the pulleys. Each belt 21 is preferably a V-belt engaged in V-section grooves of the associated pulleys. If it is desired to include slip in the drive transmission by way of the drive transmission means 18 and 19 the flanks of the belts on the one hand and the flanks of the V-section grooves of the pulleys on the other hand can differ with respect to the included angle so that in cross-section the mutually contacting belt and pulley flanks are in contact over only part of the respective flank areas. Slip can also be achieved by mounting of at least one of the pulleys in each drive transmission means 18 or 19 or the associated axle shaft by way of a slip-coupling, which slips above a threshold torque, or a slip clutch achieving a similar function can be provided in each gearbox. In an alternative embodiment, a mechanically positive or interlocking coupling of belt and pulleys is provided instead of a friction coupling by way of a V-belt and corresponding pulleys.

For control and activation of the motors 16a and 17a the drive system 10 comprises a control unit 22 and an energy supply unit 23, which for preference are located between - at least in plan view - the motors. The energy supply unit 23 in the case of electric motors can consist of an on-board battery or battery pack. The energy source provided by the unit is obviously matched to the type of motor. In the case of a robotic vehicle the control unit 22 is preferably remotely controllable, such as by radio, to supply signals to the motor for, inter alia, activation and deactivation, speed change, change of rotational direction and other operating permutations customary for electric motors. These permutations preferably include independent control of the motors to provide, for example, drive at reduced speed on one side of the system, or drive only on that side, so as to induce skid-steer for vehicle turning within a small length without a need for steerable wheels. In that case, the wheels on the other side can, depending on the state of the associated motor, rotate freely or, preferably, be locked against rotation.

The wheels on that other side can also be driven in reverse to further reduce the distance in which turning can be achieved. Assuming a capability of driving the wheels not only at zero speed, but also in reverse, the table below illustrates the range of turning achievable with a full complement of speed and directional control of the motors individually:

| Speed of forward driving: nearside wheels | Speed of forward driving: offside wheels | Direction of system/vehicle movement |
|---|---|---|
| +100% | +100% | 0/360° |
| +100% | 0% | 45° |
| +100% | -100% | 90° (clockwise rotation) |
| -100% | 0% | 135° |
| -100% | -100% | 180° |
| 0% | -100% | 225° |
| -100% | +100% | 270° (anticlockwise rotation) |
| 0% | +100% | 315° |

It will be apparent that intermediate variations of the speed of forward driving of the wheels on either side or both sides within the range 0% to +100% or 0% to -100% will correspondingly redirect the vehicle in any angular direction within the full 360° range.

Moreover, the skid-steer facility described in the foregoing may be assisted if the directly driven wheels have structured ground-engaging surfaces, for example studded or otherwise treaded tyres on wheel rims, and the indirectly driven wheels have smooth ground-engaging surfaces, in effect slick tyres, so that scuffing is reduced when skid-steer is induced.

The layout of the drive system 10 is essentially modular, in which the construction and arrangement of the first drive means and first drive transmission means 18 together with associated axle shafts 12a and 14a are substantially the same as the construction and arrangement of the second drive means and second drive transmission means 19 together with associated axle shafts 12b and 14b. Other symmetries of the constituents of the drive system 10 can also be recognised from Fig. 1. The modularity substantially reduces production cost and facilitates replacement of damaged or worn components.

A particular advantage of the drive system 10 with two endless belts 21 forming part of the drive transmission systems and arranged on either side of the drive system 10 is that the belts can additionally function as secondary traction elements, namely as ground-engaging tracks for exerting traction on the surface of the ground over which the vehicle is travelling (the term "ground" in this specification embraces any substrate of whatever kind supporting the vehicle, whether in motion or at rest). This function is achieved by, in particular, selecting a diameter of the pulleys 20 so that the lower run of each belt can act as a ground-engaging run when any part of the ground surface, as defined above, enters between the wheels 13a and 15a or 13b and 15b to an extent exceeding the spacing of that run from the ground surface, the ground surface being indicated in Fig. 2 by 24 and the spacing by 25. The point at which either one of the belts assumes its secondary tractive function is thus determined by the spacing 25, which can be varied by, in particular, varying of the pulley diameter and circumferential dimension of the endless belt. The secondary traction elements represented by the belts may allow, for example, a vehicle equipped with such a drive system to negotiate obstacles such as steps, ledges, gutters, rocks, branches and other debris in circumstances which might otherwise lead to beaching of the vehicle intermediate the axles. The mobility of the vehicle over obstacle-strewn surfaces is thus significantly enhanced. The capability of the belt to find grip when exerting traction can be increased by provision of suitable protrusions, such as ridges or studs, on the outwardly directed surfaces of the belts, as indicated in part in Figs. 1 and 2.

Referring now to Fig. 3 there is shown a four-wheel drive system 30 based on the system 10 of Fig. 1, but with the capability of individual direct driving of each wheel. The system 30 comprises a first axle 31 and a second axle 32 in this case each composed of two pairs of coaxial axle shafts 33. The two pairs of axle shafts are coaxially coupled together by a centre coupling 34 permitting relative rotation and at least the mutually remote axle shafts of the two pairs are directly driven by a respective drive means and at the distal ends carry respective wheels 35. Each drive means comprises an electric motor 36 and a gearbox 37, which have substantially the same construction and function as in the case of the drive system 10 of Fig. 1. The wheel-carrying axle shafts 33 at each side of the system 30 are again intercoupled by respective belt-and-pulley drive transmission means, composed of pulleys and ground-engaging belts of the same configuration as in claim 1. The four motors 36 are individually and independently controlled by a single control unit 38 and supplied with energy by an energy supply unit 39, the two units having the same location and function as in the system of Fig. 1.

The system 30 has substantially the same function and capabilities as the system 10 of Fig.1, except that each wheel 35 can be directly driven by the associated motor 36 or indirectly driven by the associated belt-and-pulley drive transmission means or both directly driven by the associated motor and indirectly driven by the associated belt-and-pulley drive transmission means, depending on which motor or which motors is or are switched to an active or driving state by the control unit 39. In a basic operation the system can function similarly to the system of Fig. 1, i.e. with two directly and two indirectly driven wheels in the specified diagonal arrangement, but the other two motors can be selectably brought into operation to provide direct driving of all four wheels if more power and, especially, torque are required and/or if designed-in slip of the first and/or second belt-and-pulley drive transmission means is to be excluded in circumstances when maximum torque is needed. Various other permutations of control of the motors are possible depending on the capabilities of the control unit, especially operation of the motors at different speeds and selectably and selectively in reverse. In addition to the variable influences on driving of the wheels derivable from differential control of the motors 36 by way of the control unit 38, variable driving of the wheels is also achievable by permitting or excluding slippage of the belts relative to the pulleys, such as by the aforementioned relationship of belt and pulley flank engagement areas and additionally or alternatively by change in belt tension at the pulleys. Change in belt tension can be achieved actively, such as by action on tensioning rollers, or passively, as in circumstances where a leading wheel encountering an obstacle rotates at reduced speed and the trailing wheel with belt coupling thereto rotates at undiminished speed, leading to increase in tension in the upper run of the belt and a torque increase at the leading wheel.

In addition to power and torque assistance, the belts of the belt-and-pulley drive transmission means of the four-motor configuration can function to provide additional traction, in the same manner as the basic two-motor configuration of Figs. 1 and 2, by utilisation of the ground-engaging capability of either or each belt to ease negotiation of steps, ledges and other such obstacles.

The four-wheel drive system described in the foregoing embodies a drive concept with mixed direct and indirect driving of individual wheels for enhanced operating flexibility in conjunction with providing a platform for a skid-steer capability, a supplementary track-laying capability and extension to selectable direct driving of all wheels in the system.

## Claims

1. A vehicle four-wheel drive system (10) comprising a first axle (12) having two coaxial first axle shafts (12a, 12b) respectively provided at the distal ends thereof with two first ground-engaging wheels (13a, 13b), a second axle (14) parallel to and spaced from the first axle (12) and having two coaxial second axle shafts (14a, 14b) respectively provided at the distal ends thereof with two second ground-engaging wheels (15a, 15b), first rotary drive means (16a, 16b) for driving a first one of the first axle shafts (12a, 12b), second rotary drive means (17a, 17b) for driving a first one of the second axle shafts (14a, 14b), first drive transmission means (18) for transmitting drive from the first one of the first axle shafts (12a, 12b) to the second one of the second axle shafts (14a, 14b) and second drive transmission means (19) for transmitting drive from the first one of the second axle shafts (14a, 14b) to the second one of the first axle shafts (12a, 12b), the wheels (13a, 13b; 15a, 15b) at the first ones of the first and second axle shafts (12a, 12b; 14a, 14b) being disposed on a first diagonal and the wheels (13a, 13b; 15a, 15b) at the second ones of the first and second axle shafts (12a, 12b; 14a, 14b) on a second diagonal of the drive system (10), wherein at least one of the first and second drive transmission means (18, 19) comprises an endless belt (21) **characterized in that** the endless belt defines a ground-engaging run and a return run.

2. A system according to claim 1, wherein the ground-engaging run extends parallel to a line tangential to points of ground engagement of the wheels (13a, 13b; 15a, 15b) at the axle shafts (12a, 12b; 14a, 14b) associated with the respective drive transmission means (18, 19) and at a predetermined spacing from that line towards the axes of those axle shafts.

3. A system according to claim 1 or claim 2, wherein the belt (21) has ground-engaging structures, for example transversely extending ridges.

4. A system according to any one of the preceding claims, wherein at least one of the first and second drive means comprises a gearbox(16b, 17b) for changing the speed of driving of the axle shaft driven by that drive means.

5. A system according to any one of the preceding claims, wherein the first and second drive means are controllable independently of one another, preferably to drive the first ones of the first and second axle shafts (12a, 12b; 14a, 14b) at respectively different speeds to induce skid-steer by the wheels (13a, 13b; 15a, 15b).

6. A system according to claim 5, wherein the speed of driving of each of the first ones of the first and second axle shafts (12a, 12b; 14a, 14b) includes zero speed.

7. A system according to any one of the preceding claims, wherein at least one of the first and second drive means (16a, 16b; 17a, 17b) is operable to provide drive in a selectable one of two opposite rotational directions.

8. A system according to any one of the preceding claims, wherein the wheels (13a, 13b; 15a, 15b) provided at the first ones of the first and second axle shafts (12a, 12b; 14a, 14b) have structured ground-engaging surfaces, wherein the structuring is provided by studded or treaded tyres, and the other wheels (13a, 13b; 15a, 15b) have smooth ground-engaging surfaces.

9. A system according to any one of the preceding claims, comprising single control means (22) for controlling the first and second drive means (16a, 16b; 17a, 17b), the control means (22) preferably being positioned in the system (10) in a location between the first and second drive means (16, 17).

10. A system according to any one of the preceding claims, wherein the coaxial axle shafts (12a, 12b; 14a, 14b) of either or each of the first and second axles (12, 14) are coupled together axially and are rotatable relative to one another.

11. A system according to any one of the preceding claims, wherein the belt (21), preferably a V-belt, is coupled to the respectively associated axle shafts (12a, 12b; 14a, 14b) by way of pulleys (20), the belt (21) preferably being arranged to slip relative to at least one of the pulleys (20) above a predetermined threshold value of torque.

12. A system according to any one of claims 1 to 10, wherein the belt (21) is a cogged belt and is coupled to the respectively associated axle shafts 12a, 12b; 14a, 14b) by way of cogged wheels.

13. A system according to claim 12, wherein at least one of the cogged wheels is connected with the respective axle shaft (12a, 12b; 14a, 14b) by way of a slipping clutch providing slip relative to the shaft above a predetermined threshold value of torque.

14. A system according to any one of the preceding claims, wherein the system (10) has a modular configuration in which the first drive means (16a, 16b), first drive transmission means (18) and first ones of the first and second axle shafts (12a, 12b; 14a, 14b) have the same component construction and arrangement as the second drive means (17a, 17b), second drive transmission means (19) and second ones of the first and second axle shafts (12, 12b; 14a, 14b) and/or in which the first drive means (16a, 16b), first drive transmission means (18) and first axle shafts (12a, 12b) have the same component construction and arrangement as the second drive means (17a, 17b), second drive transmission means (19) and second axle shafts (14a, 14b).

15. A system according to claim 1, comprising third drive means (36, 37) for driving the second one of the second axle shafts (33) and fourth drive means (36, 37) for driving the second one of the first axle shafts (33), the third and fourth drive means (36, 37; 36, 37) preferably being operable independently of the first and second drive means and preferably also independently of one another.

## Patentansprüche

1. Fahrzeug-Vierradantriebssystem (10), das eine erste Achse (12), die zwei koaxiale erste Achswellen (12a, 12b) hat, die jeweils an den distalen Enden derselben mit zwei ersten Bodeneingriffsrädern (13a, 13b) versehen sind, eine zweite Achse (14), parallel zu der ersten Achse (12) und von derselben beabstandet und die zwei koaxiale zweite Achswellen (14a, 14b) hat, die jeweils an den distalen Enden derselben mit zwei zweiten Bodeneingriffsrädern (15a, 15b) versehen sind, erste Drehantriebsmittel (16a, 16b) zum Antreiben einer ersten der ersten Achswellen (12a, 12b), zweite Drehantriebsmittel (17a, 17b) zum Antreiben einer ersten der zweiten Achswellen (14a, 14b), erste Antriebsübertragungsmittel (18) zum Übertragen des Antriebs von der ersten der ersten Achswellen (12a, 12b) zu der zweiten der zweiten Achswellen (14a, 14b) und zweite Antriebsübertragungsmittel (19) zum Übertragen des Antriebs von der ersten der zweiten Achswellen (14a, 14b) zu der zweiten der ersten Achswellen (12a, 12b) umfasst, wobei die Räder (13a, 13b; 15a, 15b) an den ersten der ersten und der zweiten Achswellen (12a, 12b; 14a, 14b) auf einer ersten Diagonale angeordnet sind und die Räder (13a, 13b; 15a, 15b) an den zweiten der ersten und der zweiten Achswellen (12a, 12b; 14a, 14b) auf einer zweiten Diagonale des Antriebssystems (10) angeordnet sind, wobei wenigstens eines von den ersten und den zweiten Antriebsübertragungsmitteln (18, 19) einen endlosen Riemen (21) umfasst, **dadurch gekennzeichnet, dass** der endlose Riemen eine Bodeneingriffsstrecke und eine Rückführungsstrecke definiert.

2. System nach Anspruch 1, wobei sich die Bodeneingriffsstrecke parallel zu einer Linie, tangential zu Bodeneingriffspunkten der Räder (13a, 13b; 15a, 15b) an den Achswellen (12a, 12b; 14a, 14b), die mit den jeweiligen Antriebsübertragungsmitteln (18, 19) verknüpft sind, und bei einem vorbestimmten Abstand von dieser Linie zu den Achsen dieser Achswellen hin erstreckt.

3. System nach Anspruch 1 oder Anspruch 2, wobei der Riemen (21) Bodeneingriffsstrukturen, zum Beispiel quer verlaufende Stege, hat.

4. System nach einem der vorhergehenden Ansprüche, wobei wenigstens eines von den ersten und den zweiten Antriebsmitteln ein Schaltgetriebe (16b, 17b) zum Ändern der Antriebsgeschwindigkeit der Achswelle, die durch dieses Antriebsmittel angetrieben wird, umfasst.

5. System nach einem der vorhergehenden Ansprüche, wobei die ersten und die zweiten Antriebsmittel unabhängig voneinander steuerbar sind, vorzugsweise, um die ersten der ersten und zweiten Achswellen (12a, 12b; 14a, 14b) mit jeweils unterschiedlichen Geschwindigkeiten anzutreiben, um Rutschlenkung durch die Räder (13a, 13b; 15a, 15b) zu veranlassen.

6. System nach Anspruch 5, wobei die Antriebsgeschwindigkeit jeder der ersten der ersten und zweiten Achswellen (12a, 12b; 14a, 14b) eine Geschwindigkeit von null einschließt.

7. System nach einem der vorhergehenden Ansprüche, wobei wenigstens eines von den ersten und den zweiten Antriebsmitteln (16a, 16b; 17a, 17b) funktionsfähig ist, um Antrieb in einer wählbaren von zwei entgegengesetzten Drehrichtungen bereitzustellen.

8. System nach einem der vorhergehenden Ansprüche, wobei die Räder (13a, 13b; 15a, 15b), die an den ersten der ersten und zweiten Achswellen (12a, 12b; 14a, 14b) bereitgestellt werden, strukturierte Bodeneingriffsflächen haben, wobei die Strukturierung durch mit Spikes oder mit Profil versehene Reifen bereitgestellt wird, und die anderen Räder (13a, 13b; 15a, 15b) glatte Bodeneingriffsflächen haben.

9. System nach einem der vorhergehenden Ansprüche, das einzelne Steuerungsmittel (22) zum Steuern der ersten und der zweiten Antriebsmittel (16a, 16b; 17a, 17b) umfasst, wobei die Steuerungsmittel (22) vorzugsweise in dem System (10) in einer Position zwischen den ersten und den zweiten Antriebsmitteln (16, 17) angeordnet sind.

10. System nach einem der vorhergehenden Ansprüche, wobei die koaxialen Achswellen (12a, 12b; 14a, 14b) einer oder beider von der ersten und der zweiten Achse (12, 14) axial aneinander gekoppelt sind und im Verhältnis zueinander drehbar sind.

11. System nach einem der vorhergehenden Ansprüche, wobei der Riemen (21), vorzugsweise ein Keilriemen, mit Hilfe von Riemenscheiben (20) an die jeweiligen zugeordneten Achswellen (12a, 12b; 14a, 14b) gekoppelt ist, wobei der Riemen (21) vorzugsweise dafür angeordnet ist, oberhalb eines vorbestimmten Schwellenwertes des Drehmoments im Verhältnis zu wenigstens einer der Riemenscheiben (20) Schlupf zu haben.

12. System nach einem der Ansprüche 1 bis 10, wobei der Riemen (21) ein Zahnriemen ist und mit Hilfe von Zahnrädern an die jeweiligen zugeordneten Achswellen (12a, 12b; 14a, 14b) gekoppelt ist.

13. System nach Anspruch 12, wobei wenigstens eines der Zahnräder mit Hilfe einer Rutschkupplung, die oberhalb eines vorbestimmten Schwellenwertes des Drehmoments Schlupf im Verhältnis zu der Welle bereitstellt, mit der jeweiligen Achswelle (12a, 12b; 14a, 14b) verbunden ist.

14. System nach einem der vorhergehenden Ansprüche, wobei das System (10) eine modulare Konfiguration hat, bei der die ersten Antriebsmittel (16a, 16b), die ersten Antriebsübertragungsmittel (18) und erste der ersten und zweiten Achswellen (12a, 12b; 14a, 14b) die gleiche Bauteilkonstruktion und -anordnung haben wie die zweiten Antriebsmittel (17a, 17b), die zweiten Antriebsübertragungsmittel (19) und zweite der ersten und zweiten Achswellen (12a, 12b; 14a, 14b) und/oder bei der die ersten Antriebsmittel (16a, 16b), die ersten Antriebsübertragungsmittel (18) und die ersten Achswellen (12a, 12b) die gleiche Bauteilkonstruktion und -anordnung haben wie die zweiten Antriebsmittel (17a, 17b), die zweiten Antriebsübertragungsmittel (19) und die zweiten Achswellen (14a, 14b).

15. System nach Anspruch 1, das dritte Antriebsmittel (36, 37) zum Antreiben der zweiten der zweiten Achswellen (33) und vierte Antriebsmittel (36, 37) zum Antreiben der zweiten der ersten Achswellen (33) umfasst, wobei die dritten und die vierten Antriebsmittel (36, 37; 36, 37) vorzugsweise unabhängig von den ersten und den zweiten Antriebsmitteln und vorzugsweise ebenfalls unabhängig voneinander betrieben werden können.

## Revendications

1. Système d'entraînement à quatre roues motrices de véhicule (10) comprenant un premier essieu (12) comportant deux premiers arbres d'essieu (12a, 12b) coaxiaux placés respectivement aux extrémités distales de celui-ci avec deux premières roues d'interaction avec le sol (13a, 13b), un deuxième essieu (14) parallèle au premier essieu (12) et espacé de celui-ci et comportant deux deuxièmes arbres d'essieu (14a, 14b) coaxiaux placés respectivement aux extrémités distales de celui-ci avec deux deuxièmes roues d'interaction avec le sol (15a, 15b), un premier moyen d'entraînement rotatif (16a, 16b) servant à entraîner un premier des premiers arbres d'essieu (12a, 12b), un deuxième moyen d'entraînement rotatif (17a, 17b) servant à entraîner un premier des deuxièmes arbres d'essieu (14a, 14b), un premier moyen de transmission d'entraînement (18) servant à transmettre un entraînement du premier des premiers arbres d'essieu (12a, 12b) au deuxième des deuxièmes arbres d'essieu (14a, 14b) et un deuxième moyen de transmission d'entraînement (19) servant à transmettre un entraînement du premier des deuxièmes arbres d'essieu (14a, 14b) au deuxième des premiers arbres d'essieu (12a, 12b), les roues (13a, 13b ; 15a, 15b) au niveau des premiers des premiers et deuxièmes arbres d'essieu (12a, 12b ; 14a, 14b) étant disposées sur une première diagonale et les roues (13a, 13b ; 15a, 15b) au niveau des deuxièmes des premiers et deuxièmes arbres d'essieu (12a, 12b ; 14a, 14b) sur une deuxième diagonale du système d'entraînement (10), au moins un des premier et deuxième moyens de transmission d'entraînement (18, 19) comprenant une courroie sans fin (21), **caractérisé en ce que** la courroie sans fin définit une section d'interaction avec le sol et une section de retour.

2. Système selon la revendication 1, dans lequel la section d'interaction avec le sol s'étend parallèlement à une ligne tangente à des points d'interaction avec le sol des roues (13a, 13b ; 15a, 15b) au niveau des arbres d'essieu (12a, 12b ; 14a, 14b) associés avec les moyens de transmission d'entraînement (18, 19) respectifs et à une distance prédéterminée de cette ligne en direction des axes de ces arbres d'essieu.

3. Système selon la revendication 1 ou la revendication 2, dans lequel la courroie (21) comporte des structures d'interaction avec le sol, par exemple des nervures s'étendant transversalement.

4. Système selon l'une quelconque des revendications précédentes, dans lequel au moins un des premier et deuxième moyens d'entraînement comprend une boîte de vitesses (16b, 17b) permettant de changer la vitesse d'entraînement de l'arbre d'essieu entraîné par ce moyen d'entraînement.

5. Système selon l'une quelconque des revendications précédentes, dans lequel les premier et deuxième moyens d'entraînement peuvent être commandés indépendamment l'un de l'autre, de préférence afin d'entraîner les premiers des premiers et deuxièmes arbres d'essieu (12a, 12b ; 14a, 14b) à des vitesses respectives différentes de façon à mettre en oeuvre une direction à glissement par les roues (13a, 13b ; 15a, 15b).

6. Système selon la revendication 5, dans lequel la vitesse d'entraînement de chacun des premiers des premiers et deuxièmes arbres d'essieu (12a, 12b ; 14a, 14b) comprend une vitesse nulle.

7. Système selon l'une quelconque des revendications précédentes, dans lequel au moins un des premier et deuxième moyens d'entraînement (16a, 16b ; 17a, 17b) peut être mis en oeuvre pour assurer un entraînement dans une direction sélectionnable parmi deux directions de rotation opposées.

8. Système selon l'une quelconque des revendications précédentes, dans lequel les roues (13a, 13b ; 15a, 15b) placées au niveau des premiers des premiers et deuxièmes arbres d'essieu (12a, 12b ; 14a, 14b) comportent des surfaces d'interaction avec le sol structurées, la structuration étant réalisée par des pneumatiques cloutés ou des pneumatiques à sculptures, et les autres roues (13a, 13b ; 15a, 15b) comportent des surfaces d'interaction avec le sol lisses.

9. Système selon l'une quelconque des revendications précédentes, comprenant un moyen de commande (22) unique servant à commander les premier et deuxième moyens d'entraînement (16a, 16b ; 17a, 17b), le moyen de commande (22) étant de préférence positionné dans le système (10) à un endroit entre les premier et deuxième moyens d'entraînement (16, 17) .

10. Système selon l'une quelconque des revendications précédentes, dans lequel les arbres d'essieu (12a, 12b ; 14a, 14b) coaxiaux du premier et/ou du deuxième essieu (12, 14) sont accouplés l'un avec l'autre axialement et sont rotatifs l'un par rapport à l'autre.

11. Système selon l'une quelconque des revendications précédentes, dans lequel la courroie (21), de préférence une courroie en V, est accouplée aux arbres d'essieu (12a, 12b ; 14a, 14b) respectivement associés par le biais de poulies (20), la courroie (21) étant de préférence conçue pour glisser vis-à-vis d'au moins une des poulies (20) au-dessus d'une valeur seuil prédéterminée de couple.

12. Système selon l'une quelconque des revendications 1 à 10, dans lequel la courroie (21) est une courroie crantée et est accouplée aux arbres d'essieu (12a, 12b ; 14a, 14b) respectivement associés par le biais de roues dentées.

13. Système selon la revendication 12, dans lequel au moins une des roues dentées est raccordée à l'arbre d'essieu (12a, 12b ; 14a, 14b) respectif par le biais d'un accouplement à glissement assurant un glissement vis-à-vis de l'arbre au-dessus d'une valeur seuil prédéterminée de couple.

14. Système selon l'une quelconque des revendications précédentes, le système (10) présentant une configuration modulaire dans laquelle le premier moyen d'entraînement (16a, 16b), le premier moyen de transmission d'entraînement (18) et les premiers des premiers et deuxièmes arbres d'essieu (12a, 12b ; 14a, 14b) présentent les mêmes construction et agencement de composants que le deuxième moyen d'entraînement (17a, 17b), le deuxième moyen de transmission d'entraînement (19) et les deuxièmes des premiers et deuxièmes arbres d'essieu (12a, 12b ; 14a, 14b) et/ou dans laquelle le premier moyen d'entraînement (16a, 16b), le premier moyen de transmission d'entraînement (18) et les premiers arbres d'essieu (12a, 12b) présentent les mêmes construction et agencement de composants que le deuxième moyen d'entraînement (17a, 17b), le deuxième moyen de transmission d'entraînement (19) et les deuxièmes arbres d'essieu (14a, 14b).

15. Système selon la revendication 1, comprenant un troisième moyen d'entraînement (36, 37) servant à entraîner le deuxième des deuxièmes arbres d'essieu (33) et un quatrième moyen d'entraînement (36, 37) servant à entraîner le deuxième des premiers arbres d'essieu (33), les troisième et quatrième moyens d'entraînement (36, 37 ; 36, 37) pouvant de préférence être mis en oeuvre indépendamment des premier et deuxième moyens d'entraînement et de préférence également indépendamment l'un de l'autre.
